# EUROPEAN PATENT APPLICATION

(11) **EP 4 086 978 A1**
(43) Date of publication of application: **09.11.2022**
(21) Application number: 20910731.7
(22) Date of filing: 06.08.2020

(54) **WELDING-FREE CONNECTOR ELECTRICALLY CONNECTED TO BATTERY CELL, AND LITHIUM ION BATTERY COMPRISING THE CONNECTOR**

(30) Priority: 30.12.2019 CN 201911397763
(71) Applicant: Hefei Gotion High-Tech Power Energy Co., Ltd., Hefei, Anhui 230012 (CN)
(72) Inventor: ZHANG, Ya, Hefei, Anhui 230012 (CN); CHENG, Qian, Hefei, Anhui 230012 (CN); CAI, Steven, Hefei, Anhui 230012 (CN); LI, Chen, Hefei, Anhui 230012 (CN)
(74) Representative: Berggren Oy
(86) International application number: PCT/CN2020/107304
(87) International publication number: WO 2021/135224

(57) **Abstract**

Disclosed in the present disclosure are a welding-free connector electrically connected to a battery cell, and a lithium ion battery comprising the connector. The connector comprises current collector bars, the current collector bars being clamped with a connecting plate; the connecting plate comprises a back plate and clamping posts fixedly provided at one side of the back plate at intervals, and grooves for clamping with the current collector bars are formed between adjacent clamping posts; a thermal decomposition material layer is coated on the periphery of the clamping posts or the inner side walls of the grooves, and the thermal decomposition material layer is formed by compounding a thermosensitive resin and a modified material; and the back plate and the clamping posts are both made of a high-thermal-conductivity insulating material. The present disclosure uses an electrically-connected connector composed of current collector bars and a connecting plate connected thereto in a cooperating manner, which has a certain mechanical strength and good heat conduction capability under a normal temperature. When a short circuit occurs, the thermosensitive resin in the thermal decomposition material layer coated on the connecting plate will be decomposed when being heated, causing a pre-tightening force between battery cell tabs and a connection piece to disappear, such that the connection between the battery cells can be disconnected, preventing the occurrence of thermal runaway, and greatly improving the safety of the battery.

## Description

### Technical Field

The present disclosure relates to the technical field of lithium ion batteries, and in particular, to a welding-free connector electrically connected to a battery cell, and a lithium ion battery comprising the connector.

### Background

In the past two decades, lithium ion batteries have become the most important power sources for new energy vehicles. In order to make the lithium ion batteries widely popularized, it is necessary to further reduce the cost thereof while improving the performance of the lithium ion battery. In addition, in order to improve the endurance mileage of an electric vehicle, people in the industry are still continuing to pursue that the lithium ion battery has a higher energy density.

In the design of a battery pack and module, the design of a fuse electrically connected between battery cells has always been a difficult point. When a single battery cell fails, such as micro short circuiting, if electrical connection to the battery cell can be cut off in time, further thermal runaway of the battery cell can be prevented. However, the existing current fuses have many problems: low reliability, and being easy to fuse accidentally during fast charging; high cost, and requiring a large number of fuses to be mounted; and complex structure, etc.

In addition, in the aspect of preventing thermal runaway, a square battery cell can lead out hot airflow of a single battery cell by means of the designs of an explosion-proof valve and an airflow channel, and can prevent heat transfer between battery cells by means of a heat insulating material between the battery cells, so that heat diffusion between square battery cells can be controlled to some extent. A soft pack battery cell has a more free shape design relative to the square battery cell; however, after thermal runaway occurs in a single battery cell, it is difficult to lead out hot gas by using a design similar to the explosion-proof valve of the square battery, as the position where a crack occurs in the soft pack battery cell is random, and the generated hot gas causes sequential thermal runaway in the surrounding battery cells. Thus, the thermal runaway control of a soft pack module is a difficult point in the design of the current modules.

### Summary

An object of some embodiments of the present disclosure is to provide a welding-free connector electrically connected to a battery cell.

Another object of some embodiments of the present disclosure is to provide a preparation method for the welding-free connector.

Another object of some embodiments of the present disclosure is to provide a lithium ion battery comprising the connector.

In order to achieve the described objects, some embodiments of the present disclosure provide the following technical solutions:

some embodiments of the present disclosure provide a welding-free connector, wherein a thermal decomposition material layer made of a high-temperature decomposable resin is coated on clamping posts connected to current collectors; and when micro short circuiting occurs in a battery cell, electric connection between battery cells can be disconnected, thereby preventing the occurrence of thermal runaway, and greatly improving the safety performance of a battery.

Specifically, in one aspect, some embodiments of the present disclosure provide a welding-free connector electrically connected to a battery cell, comprising current collector bars, wherein the current collector bars are clamped with a connecting plate, the connecting plate comprises a back plate and clamping posts fixedly provided at one side of the back plate at intervals, and grooves for clamping with the current collector bars are formed between adjacent clamping posts; a thermal decomposition material layer is coated on the periphery of the clamping posts or the inner side walls of the grooves, and the thermal decomposition material layer is formed by compounding a thermosensitive resin and a modified material; and the back plate and the clamping posts are both made of a high-thermal-conductivity insulating material.

On the other hand, some embodiments of the present disclosure further provide a welding-free connecting plate electrically connected to a battery cell, wherein the connecting plate comprises a back plate and clamping posts fixedly provided at one side of the back plate at intervals, and grooves for clamping with current collector bars are formed between adjacent clamping posts; a thermal decomposition material layer is coated on the periphery of the clamping posts or the inner side walls of the grooves, and the thermal decomposition material layer is formed by compounding a thermosensitive resin and a modified material; and the back plate and the clamping posts are both made of a thermally-conductive insulating material.

In the welding-free connector and connecting plate electrically connected to a battery cell according to some embodiments of the present disclosure, the thermally-conductive insulating material is preferably a high-thermal-conductivity material, for example, an insulating material having a thermal conductivity greater than 2 W/m-K.

Some embodiments of the present disclosure use an electrically-connected connector composed of current collector bars and a connecting plate connected thereto in a cooperating manner, which has a certain mechanical strength and good heat conduction capability under a normal temperature. At a normal temperature, battery cell tabs are inserted into the grooves of the connector, and the battery cell tabs are in close communication with the current collector bars by means of pressures applied by the grooves, thereby achieving connection between the battery cells; and when a certain temperature is reached, thermal runaway occurs, and when the temperature is increased to 180°C or higher, the degradation temperature of the thermal decomposition material layer is reached (thermal degradation usually occurs at a temperature about 200°C, and the temperature can be adjusted), so that the thermal decomposition material layer is decomposed into carbon dioxide, water, and a carbon material. That is, the thermosensitive resin in the thermal decomposition material layer coated on the periphery of the clamping posts or the inner side walls of the grooves on the connecting plate is decomposed when being heated, so that the structure of the connector is changed, causing a pre-tightening force between the battery cell tabs and a connecting piece to disappear, thereby disconnecting the battery cell tabs from the connecting piece, such that the connection between the battery cells can be disconnected, preventing the occurrence of thermal runaway, and being able to greatly improve the safety of the battery.

In further solutions, the mass percentage of the thermosensitive resin in the thermal decomposition material is 70% - 95%, and the modified material is the balance; the thermosensitive resin comprises one or more of polycarbonate, polyethylene carbonate and polypropylene carbonate (PPC); and the modified material comprises a temperature-controlled catalyst. The function of the thermosensitive resin is to be decomposed at a certain temperature when an accident such as an internal short circuit occurs in a single battery cell, so as to release the pressure on the current collector bar, and cut off the electrical connection of the battery cell, so that thermal runaway does not occur in the entire module. The function of the modified material is to increase the electrical conductivity of the decomposable thermosensitive resin or to decrease the thermal decomposition temperature thereof. Thus, the thermal decomposition material in some embodiments of the present disclosure has good thermal conduction capability at a normal temperature, and when a certain temperature is reached, the thermal decomposition material is decomposed by being heated, so that the connection between battery cells can be cut off, preventing thermal runaway, and greatly improving the safety of the battery.

In further solutions, the modified material further comprises a carbon material and/or a glass fiber; and the temperature-controlled catalyst is at least one of an inorganic substance or a functional group-modified polycarbonate compound.

Preferably, the carbon material can be selected from one or a combination of two or more of carbon black, Ketjen black, carbon nanotube, graphene, carbon fiber and VGCF (Vapor Grown Carbon Fiber). At a normal temperature, the thermosensitive resin is fully mixed with the carbon material, so that a sufficient mechanical strength and thermal conductivity are obtained; and the high-temperature-decomposable thermosensitive resin is decomposed into carbon dioxide and water, leaving only the coated high-thermal-conductivity insulating material. At this time, the structure of the connector changes, causing a pre-tightening force between the battery cell tabs and a connecting piece to disappear, thereby disconnecting the battery cell tabs from the connecting piece, such that the connection between the battery cells can be disconnected, preventing the occurrence of thermal runaway.

The inorganic substance in the temperature-controlled catalyst can be one or more of hydrochloride, sulphate, potassium hydroxide, carbonic acid normal salt or acid carbonate, etc.; and
specific carbonic acid normal salts comprise sodium carbonate, potassium carbonate, calcium carbonate, lithium carbonate, ammonium carbonate, and the acid carbonate comprises sodium bicarbonate, etc.

The functional group-modified polycarbonate compound refers to functional group-modified polycarbonate, polyethylene carbonate or polypropylene carbonate; and the functional group is a hydroxyl group, a carboxyl group, a halogen group or a glycidyl. The decomposition temperature of the thermosensitive resin can be decreased by modification of the functional group or adding an inorganic substance, a salt, or a functional group-modified polycarbonate compound, so that the decomposition temperature can be adjusted between 150°C and 400°C. The decomposition temperature of the thermosensitive resin can be decreased from 200°C - 250°C to around 150°C by modifying the molecular chain of the thermosensitive resin, especially by adding glycidyl-modified polycarbonate.

Preferably, the polycarbonate comprises one or more of 3-methyl polycarbonate, 4-tert-butyl polycarbonate, 4-methyl-4-phenyl polycarbonate, 3, 5-dimethyl polycarbonate, etc.

More preferably, the size of the graphene is 5 nm - 200 µm; the sizes of the carbon black and Ketjen black are 1 nm - 100 nm; the carbon nanotube is a single-walled carbon nanotube or a multi-walled carbon nanotube, and has a diameter of 1 nm - 50 nm and a length of 10 nm -1 mm; the carbon fiber and the VGCF have a diameter of 80 nm - 8 µm, a BET of 5 m²/g - 1000 m²/g and a length of 200 nm -1 mm; and the glass fiber has a diameter of 500 nm - 50 µm.

In further solutions, the thermal decomposition material layer has a degradation temperature of 150°C to 250°C and a thickness of 1 mm - 10 mm.

In further solutions, in some embodiments of the present disclosure, the high-thermal-conductivity insulating material in the welding-free connector serves as a base material, and can be an inorganic ceramic material or an organic material. Specifically, the high-thermal-conductivity insulating material may be a ceramic material, a high-thermal-conductivity polymer, or a resin composite material.

Preferably, the ceramic material may comprise one or more of Al₂O₃, AIN, BeO, Si₃N₄, SiC, etc. The high-thermal-conductivity polymer may be one or more of polyacetylene, polyaniline or polypyrrole. The resin composite material may be a mixture of one or more of polyamide, polyphenylene sulfide, polyethylene terephthalate and one or more of metal oxide (such as aluminum oxide), graphite fiber, and carbon fiber.

In another aspect of some embodiments of the present disclosure, a preparation method for the described welding-free connector or connecting plate is provided, comprising a preparation method for the thermal decomposition material layer, comprising: heating a thermosensitive resin to a molten state, adding a modified material having a mass percentage of 5% - 30%, and stirring and mixing to obtain a slurry; and then coating the slurry on the periphery of the clamping posts or the inner side walls of grooves, and curing at a room temperature to form the thermal decomposition material layer.

In a third aspect of some embodiments of the present disclosure, a lithium ion battery is provided, which comprises the described welding-free connector or connecting plate. The lithium ion battery has high safety performance as the lithium ion battery comprises the connector made of a high-temperature-decomposable resin in some embodiments of the present disclosure.

In conclusion, some embodiments of the present disclosure provide a welding-free connector and connecting plate which are electrically connected to a battery cell. As conventional electrical connection of battery cells usually uses a laser welding process, has many welding points and a complex process, and pollution of metal impurities such as metal splashes will be generated, and it is difficult to repair and replace a battery cell after welding. In some embodiments of the present disclosure, by using a connector-type current collector bar, the complexity of the process is greatly reduced, the reliability is improved, and repair is very easy.

In some embodiments of the present disclosure, the connector is composed of two parts, i.e. a current collector bar and an adaptive high-thermal-conductivity degradable plastic connecting plate. The connecting plate is made of a high-thermal-conductivity insulating material; a thermal decomposition material layer is coated on the periphery of the clamping posts or the inner side walls of the grooves; and the thermal decomposition material layer is formed by compounding a thermosensitive resin and a modified material. When a short circuit occurs inside a single battery cell, the generated high temperature will decompose the thermal decomposition material layer, thereby reducing the pressure on the current collector bar, so that the current collector bar is separated from the battery cell tab, and finally thermal runaway does not occur in the module.

In addition, in a battery module, a slave of a BMS which is used for measuring signals such as the voltage and temperature of each battery cell of the module can be directly attached to a back plate made of a high-thermal-conductivity insulating material, so that the slave of the BMS can share heat dissipation of the module, thereby achieving a large equalizing current.

### Brief Description of the Drawings

Fig. 1 is a first schematic structural diagram of a connecting plate in some embodiments of the present disclosure.
Fig. 2 is a second schematic structural diagram of a connecting plate in some embodiments of the present disclosure.
Fig. 3 is a schematic diagram of a state before connection of a connector in some embodiments of the present disclosure.
Fig. 4 is a schematic diagram of a state after connection of a connector in some embodiments of the present disclosure.

### Detailed Description of the Embodiments

Hereinafter, the technical solutions in the embodiments of the present disclosure will be described clearly and completely with reference to the accompanying drawings of the embodiments of the present disclosure. Obviously, the embodiments as described are only some of the embodiments of the present disclosure, and are not all of the embodiments. All other embodiments obtained by a person of ordinary skill in the art on the basis of the embodiments of the present disclosure without any inventive effort shall all fall within the scope of protection of the present disclosure.

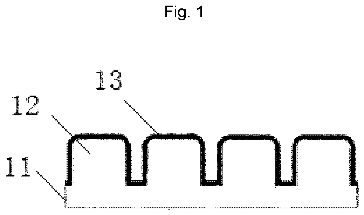

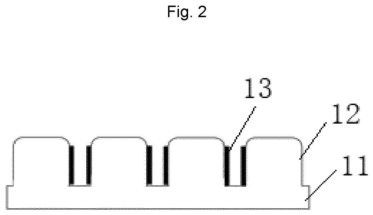

As shown in Figs. 1 and 2, a connecting plate 1 comprises a back plate 11 and clamping posts 12 fixedly provided at one side of the back plate at intervals, grooves for clamping with current collector bars being formed between adjacent clamping posts; and the periphery of the clamping posts 12 is coated with a thermal decomposition material layer 13 (as shown in Fig. 1), or a thermal decomposition material layer 13 is coated on the inner side walls of the grooves (as shown in Fig. 2).

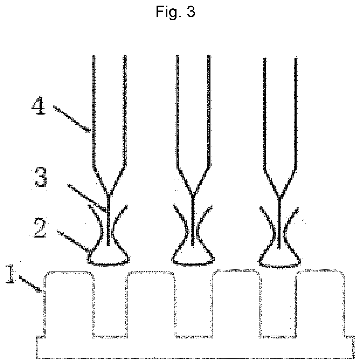

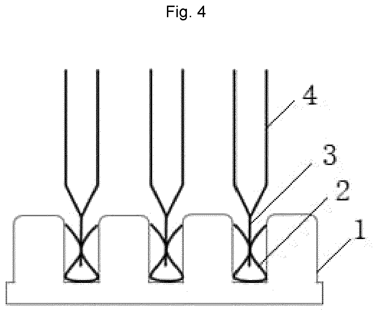

As shown in Figs. 3 and 4, a welding-free connector electrically connected to a battery cell comprises current collector bars 2, wherein the current collector bars 2 are clamped with a connecting plate 1, the connecting plate 1 comprises a back plate and clamping posts fixedly provided at one side of the back plate at intervals, and grooves for clamping with the current collector bars 2 are formed between adjacent clamping posts; a thermal decomposition material layer is coated on the periphery of the clamping posts or the inner side walls of the grooves, and the thermal decomposition material layer is formed by compounding a thermosensitive resin and a modified material; and the back plate and the clamping posts are both made of a high-thermal-conductivity insulating material. During assembly, battery cell tabs 3 of battery cells 4 and the current collector bars 2 are together clamped into the grooves on the connecting plate 1, and due to the pressing of the grooves against the current collector bars 2, the current collector bars are in close contact with the battery cell tabs 3 to form a conduction circuit. When a short circuit occurs in a certain battery cell, a high temperature generated by the battery cell is transferred to the thermal decomposition material layer by means of the current collector bars 2, and when a certain temperature is reached, the thermal decomposition material layer is decomposed, thereby reducing the pressure on the current collector bars 2, separating the current collector bars from the battery cell tabs 3, and disconnecting circuits with other battery cells, so that thermal runaway does not occur in the module.

The thermal decomposition material layer is formed by compounding a thermosensitive resin and a modified material, in which the mass percentage of the thermosensitive resin is 70% to 95%, and the modified material is the balance; the thermosensitive resin comprises one or more of polycarbonate, polyethylene carbonate and polypropylene carbonate; and the modified material is a temperature-controlled catalyst, or a mixture of at least one of carbon material and glass fiber and a temperature-controlled catalyst.

The temperature-controlled catalyst is at least one of an inorganic substance or a functional group-modified polycarbonate compound.

The carbon material is selected from one or a combination of two or more of carbon black, Ketjen black, carbon nanotube, graphene, carbon fiber and VGCF;
the inorganic substance is one or more of hydrochloride, sulphate, potassium hydroxide and a salt;
the salt is a carbonic acid normal salt or an acid carbonate;
the functional group-modified polycarbonate compound refers to functional group-modified polycarbonate, polyethylene carbonate or polypropylene carbonate; and the functional group is a hydroxyl group, a carboxyl group, a halogen group or a glycidyl. The polycarbonate comprises one or more of 3-methyl polycarbonate, 4-tert-butyl polycarbonate, 4-methyl-4-phenyl polycarbonate, 3, 5-dimethyl polycarbonate, etc.

The size of the graphene is 5 nm - 200 µm; the sizes of the carbon black and Ketjen black are 1 nm -100 nm; the carbon nanotube is a single-walled carbon nanotube or a multi-walled carbon nanotube, and has a diameter of 1 nm - 50 nm and a length of 10 nm - 1 mm; and the carbon fiber and the VGCF have a diameter of 80 nm - 8 µm, a BET of 5 m²/g - 1000 m²/g and a length of 200 nm -1 mm.

The glass fiber has a diameter of 500 nm - 50 µm.

The thermal decomposition material layer has a degradation temperature of 150°C to 250°C and a thickness of 1 mm -10 mm.

In order to verify the decomposition-starting temperature, the compression strength and the hardness of thermal decomposition material layers composed of different components, experiments were specifically performed, and specifically see embodiment 1 - embodiment 7, and % in the following embodiments all represents the mass percentage.

### Comparative Example 1

A cylindrical sample strip having a diameter of 25 mm and a length of 80 mm was prepared by using 100% of polypropylene carbonate.

### Embodiment 1

A cylindrical sample strip having a diameter of 25 mm and a length of 80 mm was prepared by mixing 90% of polypropylene carbonate and 10% of potassium hydroxide.

### Embodiment 2

A cylindrical sample strip having a diameter of 25 mm and a length of 80 mm was prepared by uniformly mixing 95% of polyethylene carbonate and 5% of sodium carbonate.

### Embodiment 3

70% of polycarbonate, 20% of potassium hydroxide and 10% of sodium sulfate were used. A cylindrical sample strip having a diameter of 25 mm and a length of 80 mm was prepared.

### Embodiment 4

85% of polypropylene carbonate, 10% of hydroxylated polycarbonate and 5% of carbon black (50 nm) were used. A cylindrical sample strip having a diameter of 25 mm and a length of 80 mm was prepared.

### Embodiment 5

85% of polycarbonate, 5% of sodium carbonate, and 10% of carbon fiber (having a diameter of 200 nm and a length of 1 µm) were used. A cylindrical sample strip having a diameter of 25 mm and a length of 80 mm was prepared.

### Embodiment 6

85% of polyethylene carbonate, 10% of sodium sulfate and 5% of graphene (having a size of 2 µm and about 8 layers on average) were used. A cylindrical sample strip having a diameter of 25 mm and a length of 80 mm was prepared.

### Embodiment 7

80% of polypropylene carbonate, 10% of sodium sulphate and 10% of glass fiber (having a diameter of 1 µm and a length of 100 µm) were used. A cylindrical sample strip having a diameter of 25 mm and a length of 80 mm was prepared.

The decomposition-starting temperature, compression strength and Shore hardness of the sample strips prepared in the described Comparative Example 1 and Embodiment 1 - Embodiment 7 were respectively measured, wherein a thermogravimetric analysis (TG) test method is based on JIS K 7121-1987, in which the temperature corresponding to a weight change higher than 7.1% is considered to be the decomposition-starting temperature;
the measurement of compression strength is based on a test method of JIS K 7208, and the compression strength was measured by a universal testing machine MCT-1150; and
the hardness test was performed according to JIS B 7727 by using model D of Nakai Precision Machinery Mfg. Co., Ltd.

The results of the specific experiments are shown in Table 1 below:

**Table 1:**

| | Decom position-starti ng temperature | Compression strength | Shore hardness |
|---|---|---|---|
| Comparative Example 1 | 300°C | 20 Mpa | 40 |
| Embodiment 1 | 230°C | 21 Mpa | 45 |
| Embodiment 2 | 250°C | 19 Mpa | 43 |
| Embodiment 3 | 200°C | 22 Mpa | 44 |
| Embodiment 4 | 180°C | 80 Mpa | 75 |
| Embodiment 5 | 210°C | 110 Mpa | 85 |
| Embodiment 6 | 195°C | 105 Mpa | 97 |
| Embodiment 7 | 185°C | 110 Mpa | 96 |

By adding a certain proportion of temperature-controlled catalyst, the decomposition temperature of the polycarbonate-based organic matter can be decreased from the original 300°C to about 200°C, and the decomposition temperature thereof can be precisely controlled by controlling the added substances and amounts thereof. In this way, the time at which the electrical connection between the battery cells is disconnected can be precisely controlled. In addition, by adding a carbon material, the compression strength and the surface hardness of the material can be significantly improved, making same suitable for use requirements.

In order to detect the time when thermal runaway occurs in a battery cell module regarding thermal decomposition material layers of different components, Comparative Example 2, Comparative Example 3, Embodiment 8 and Embodiment 9 were specifically performed for comparison.

### Comparative Example 2

24 soft pack battery cells constitute a module, the size of the battery cell is 536 mm x 102 mm x 8.5 mm, the capacity of each battery cell is 55 Ah, the material of the negative/positive electrode of each battery cell is graphite/LFP, and the energy density of a single battery cell is 185 Wh/kg and 379 Wh/L. A connection mode of the module is 2P12S, as specifically shown by the electrical connection in Figs. 3 and 4. The connecting plate 1 comprises a back plate and clamping posts fixedly provided at one side of the back plate at intervals, and grooves for clamping with the current collector bars 2 are formed between adjacent clamping posts; and a thermal decomposition material layer is not coated on the periphery of the clamping posts or the inner side walls of the grooves. Battery cell tabs 3 of battery cells 4 and the current collector bars 2 are together clamped into the grooves on the connecting plate 1, and due to the pressing of the grooves against the current collector bars 2, the current collector bars are in close contact with the battery cell tabs 3 to form a conduction circuit.

The experiment method is to make a single battery cell to be over-charged with SOC150, and the time when thermal runaway occurs in the whole battery module is observed, specifically as shown in Table 2.

In Comparative Example 2, the materials of all the components of the connecting plate 1 are 100% polytetrafluoroethylene.

### Comparative Example 3

Comparative Example 3 is similar to Comparative Example 2, and the difference merely lies in that: the materials of the back plate and the clamping posts of the connecting plate 1 are all high-thermal-conductivity insulating material, i.e. polyaniline, the thickness of the thermal decomposition material layer is 5 mm, and the thermal decomposition material layer is made of 100% polypropylene carbonate.

### Embodiment 8

Embodiment 8 is similar to Comparative Example 2, and the difference merely lies in that: the materials of the back plate and the clamping posts of the connecting plate 1 are all high-thermal-conductivity insulating material Al₂O₃ ceramic, the thickness of the thermal decomposition material layer is 5 mm, and the thermal decomposition material layer is composed of 85% of polypropylene carbonate, 10% of potassium hydroxide and 5% of carbon fiber (having a diameter of 200 nm and a length of 1 µm). That is, first, polypropylene carbonate is heated to a molten state, and then potassium hydroxide and carbon fiber are added for stirring and mixing to obtain a slurry; and then the slurry is coated on the periphery of the clamping posts or the inner side walls of grooves, and cured at a room temperature to form the thermal decomposition material layer.

### Embodiment 9

Embodiment 9 is similar to Comparative Example 2, and the difference merely lies in that: the materials of the back plate and the clamping posts of the connecting plate 1 are all formed by mixing and casting a high-thermal-conductivity insulating material, 80% of polyethylene terephthalate and 20% of aluminium oxide nano particles (having a diameter of 50 nm); and the thickness of the thermal decomposition material layer is 5 mm, and the thermal decomposition material layer is made of 85% of polypropylene carbonate, 10% of potassium hydroxide, 3% of graphene (having a size of 2 µm and about 8 layers on average), and 2% of multi-walled carbon nanotubes (having a diameter of 30 nm and a length of 800 nm). That is, first, polypropylene carbonate is heated to a molten state, and then potassium hydroxide, graphene and multi-walled carbon nanotubes are added for stirring and mixing to obtain a slurry; and then the slurry is coated on the periphery of the clamping posts or the inner side walls of grooves, and cured at a room temperature to form the thermal decomposition material layer.

The thermal runaway time of the battery modules in Comparative Example 2, Comparative Example 3, Embodiment 8, and Embodiment 9 were measured under the same conditions, and the results are recorded in Table 2.

**Table 2:**

| | Thermal runaway time of the entire module |
|---|---|
| Comparative Example 2 | 320 s |
| Comparative Example 3 | 1810 s |
| Embodiment 8 | No thermal diffusion |
| Embodiment 9 | No thermal diffusion |

The measurement results in table 2 can illustrate that in the same case, the battery modules adopting the connector of some embodiments of the present disclosure can be disconnected in time, thereby avoiding thermal runaway of the whole module.

Although the present description is illustrated according to the embodiments, not every embodiment comprises only one independent technical solution, the illustration manner of the description is merely for clarity, and a person skilled in the art should take the description as a whole, and the technical solutions in various embodiments can be combined properly to form other embodiments that could be understood by a person skilled in the art.

Therefore, the described content merely relates to preferred embodiments of the present disclosure, and is not intended to limit the embodiment range of the present disclosure. Any equivalent transformation made according to some embodiments of the present disclosure shall belong to the scope of protection of the present disclosure.

## Claims

1. A welding-free connector electrically connected to a battery cell, comprising current collector bars and a connecting plate, wherein the current collector bars can be clamped to the connecting plate, the connecting plate comprises a back plate and clamping posts fixedly provided at one side of the back plate at intervals, and grooves for clamping with the current collector bars are formed between adjacent clamping posts; a thermal decomposition material layer is coated on the periphery of the clamping posts or the inner side walls of the grooves, and the thermal decomposition material layer is formed by compounding a thermosensitive resin and a modified material; and the back plate and the clamping posts are both made of a high-thermal-conductivity insulating material.

2. The welding-free connector electrically connected to a battery cell according to claim 1, wherein the mass percentage of the thermosensitive resin in the thermal decomposition material is 70% - 95%, and the modified material is the balance; the thermosensitive resin comprises polycarbonate, polyethylene carbonate, polypropylene carbonate; and the modified material comprises a temperature-controlled catalyst.

3. The welding-free connector electrically connected to a battery cell according to claim 2, wherein the modified material further comprises a carbon material and/or a glass fiber; and the temperature-controlled catalyst is at least one of an inorganic substance or a functional group-modified polycarbonate compound.

4. The welding-free connector electrically connected to a battery cell according to claim 3, wherein the carbon material is selected from one or a combination of two or more of carbon black, Ketjen black, carbon nanotube, graphene, carbon fiber and VGCF;
the inorganic substance is hydrochloride, sulphate, potassium hydroxide, carbonic acid normal salt or acid carbonate;
the functional group-modified polycarbonate compound refers to functional group-modified polycarbonate, polyethylene carbonate or polypropylene carbonate; and the functional group is a hydroxyl group, a carboxyl group, a halogen group or a glycidyl.

5. The welding-free connector electrically connected to a battery cell according to claim 4, wherein the size of the graphene is 5 nm - 200 µm; the sizes of the carbon black and Ketjen black are 1 nm - 100 nm; the carbon nanotube is a single-walled carbon nanotube or a multi-walled carbon nanotube, and has a diameter of 1 nm - 50 nm and a length of 10 nm - 1 mm; the carbon fiber and the VGCF have a diameter of 80 nm - 8 µm, a BET of 5 m²/g - 1000 m²/g, and a length of 200 nm -1 mm; and the glass fiber has a diameter of 500 nm - 50 µm.

6. The welding-free connector electrically connected to a battery cell according to claim 1, wherein the thermal decomposition material layer has a degradation temperature of 150°C to 250°C and a thickness of 1 mm -10 mm.

7. The welding-free connector electrically connected to a battery cell according to claim 1, wherein the high-thermal-conductivity insulating material is a ceramic material, a high-thermal-conductivity polymer, or a resin composite material.

8. The welding-free connector electrically connected to a battery cell according to claim 7, wherein the ceramic material comprises one or more of Al₂O₃, AIN, BeO, Si₃N₄ and SiC; the high-thermal-conductivity polymer is polyacetylene, polyaniline or polypyrrole; and the resin composite material is a mixture of one or more of polyamide, polyphenylene sulfide, polyethylene terephthalate and one or more of metal oxide, graphite fiber, and carbon fiber.

9. The welding-free connector electrically connected to a battery cell according to claim 1, wherein the thermal decomposition material layer is formed according to the following preparation method: heating a thermosensitive resin to a molten state, adding a modified material having a mass percentage of 5% - 30%, and stirring and mixing to obtain a slurry; and then coating the slurry on the periphery of the clamping posts or the inner side walls of grooves, and curing at a room temperature to form the thermal decomposition material layer.

10. A welding-free connecting plate electrically connected to a battery cell, wherein the connecting plate comprises a back plate and clamping posts fixedly provided at one side of the back plate at intervals, and grooves for clamping with the current collector bars are formed between adjacent clamping posts; a thermal decomposition material layer is coated on the periphery of the clamping posts or the inner side walls of the grooves, and the thermal decomposition material layer is formed by compounding a thermosensitive resin and a modified material; and the back plate and the clamping posts are both made of a thermally-conductive insulating material.

11. The welding-free connecting plate electrically connected to a battery cell according to claim 10, wherein the mass percentage of the thermosensitive resin in the thermal decomposition material is 70% - 95%, and the modified material is the balance; the thermosensitive resin comprises polycarbonate, polyethylene carbonate, and polypropylene carbonate; and the modified material comprises a temperature-controlled catalyst;
preferably, the modified material further comprises a carbon material and/or a glass fiber, and the temperature-controlled catalyst is at least one of an inorganic substance or functional group-modified polycarbonate;
further preferably, the carbon material is selected from one or a combination of two or more of carbon black, Ketjen black, carbon nanotube, graphene, carbon fiber and VGCF;
the inorganic substance is hydrochloride, sulphate, potassium hydroxide, carbonic acid normal salt or acid carbonate;
the functional group-modified polycarbonate compound refers to functional group-modified polycarbonate, polyethylene carbonate or polypropylene carbonate; and the functional group is a hydroxyl group, a carboxyl group, a halogen group or a glycidyl; and
still further preferably, the size of the graphene is 5 nm - 200 µm; the sizes of the carbon black and Ketjen black are 1 nm - 100 nm; the carbon nanotube is a single-walled carbon nanotube or a multi-walled carbon nanotube, and has a diameter of 1 nm - 50 nm and a length of 10 nm -1 mm; the carbon fiber and the VGCF have a diameter of 80 nm - 8 µm, a BET of 5 m²/g - 1000 m²/g, and a length of 200 nm -1 mm; and the glass fiber has a diameter of 500 nm - 50 µm.

12. The welding-free connecting plate electrically connected to a battery cell according to claim 10, wherein the thermal decomposition material layer has a degradation temperature of 150°C to 250°C and a thickness of 1 - 10 mm.

13. The welding-free connecting plate electrically connected to a battery cell according to claim 10, wherein the thermally-conductive insulating material is a ceramic material, a thermally-conductive polymer, or a resin composite material;
preferably, the ceramic material comprises one or more of Al₂O₃, AIN, BeO, Si₃N₄ and SiC; the thermally-conductive polymer is polyacetylene, polyaniline or polypyrrole; and the resin composite material is a mixture of one or more of polyamide, polyphenylene sulfide, polyethylene terephthalate and one or more of metal oxide, graphite fiber, and carbon fiber.

14. The welding-free connecting plate electrically connected to a battery cell according to claim 10, wherein the thermal decomposition material layer is formed according to the following preparation method: heating a thermosensitive resin to a molten state, adding a modified material having a mass percentage of 5% - 30%, and stirring and mixing to obtain a slurry; and then coating the slurry on the periphery of the clamping posts or the inner side walls of grooves, and curing at a room temperature to form the thermal decomposition material layer.

15. A lithium ion battery, wherein the lithium ion battery is provided with the welding-free connector according to any one of claims 1-9 or the connecting plate according to any one of claims 10-14.
